# EUROPEAN PATENT APPLICATION

(11) **EP 2 336 850 A1**
(43) Date of publication of application: **22.06.2011**
(21) Application number: 09757044.4
(22) Date of filing: 31.07.2009
(51) Int. Cl.: G06F 3/023, G09B 19/06, G09B 19/08

(54) **GUIXI INPUT METHOD AND SYSTEM FOR SPLITTING WORD LETTERS**

(30) Priority: 03.06.2008 CN 200810067624
(71) Applicant: Kuk, Cho Shun, Hong Kong (CN)
(72) Inventor: Kuk, Cho Shun, Hong Kong (CN)
(74) Representative: Hellmich, Wolfgang
(86) International application number: PCT/CN2009/000859
(87) International publication number: WO 2009/146610

(57) **Abstract**

A Guixi input method and system for splitting word letters, comprises classifying and sorting of words. The classifying step classifies words according to maternal lines, which comprises: splitting each word into groups, each group consists of vowels and following consonants, and only one group among the plural groups is the maternal line which consists of vowels and consonants, wherein, the consonants are called Zili, the vowels are called Muyuan, the words with the same maternal line are classified to the same class and sorted. The sorting step comprises that the words are sorted according to the alphabetical order of the Zili as follows: first, a consonant with the monophthong before the consonant is sorted, second, a consonant with the diphthong before the consonant is sorted, third, two or more consonants with vowel or vowels before the consonant are sorted according to the alphabetical order of the vowels, and so on.

## Description

### BACKGROUND OF THE INVENTION

### Field of the Invention

The present invention relates to a Guixi input method and system for splitting word letters, which can be applied to compiling various kinds of dictionaries of different countries, textbooks and reading materials, CD, software, and electronic dictionaries, etc, as long as the words are the words consisting of letters, and the present invention is convenient for popularization.

### Description of the Prior Art

Learning a foreign language requires memorizing a large amount of vocabulary words, which takes a lot of time and energy. Traditional methods to memorize vocabulary normally include the use of vocabulary book, machine-readable vocabulary software, disk, electronic dictionary, and etc. The memory effect provided by all these traditional methods, however, is poor because the vocabulary words are sorted and classified in alphabetical order without mutual relations of the words. So far, no breakthrough has been achieved in terms of dictionary-related vocabulary arrangement and memory method.

The present invention has arisen to mitigate and/or obviate the afore-described disadvantages.

### SUMMARY OF THE INVENTION

The primary object of the present invention is to provide a Guixi input method and system for splitting word letters, which produces maternal lines by splitting word letters into groups, and then the maternal lines are systematically arranged. This method makes it easy to look up words and creates association memory or full memory by creating association of the word to be looked up with its peripheral words, so that the invention can be applied to various kinds of dictionaries of different countries, textbooks and reading materials, exercise books, CD, software, and electronic dictionaries, etc.

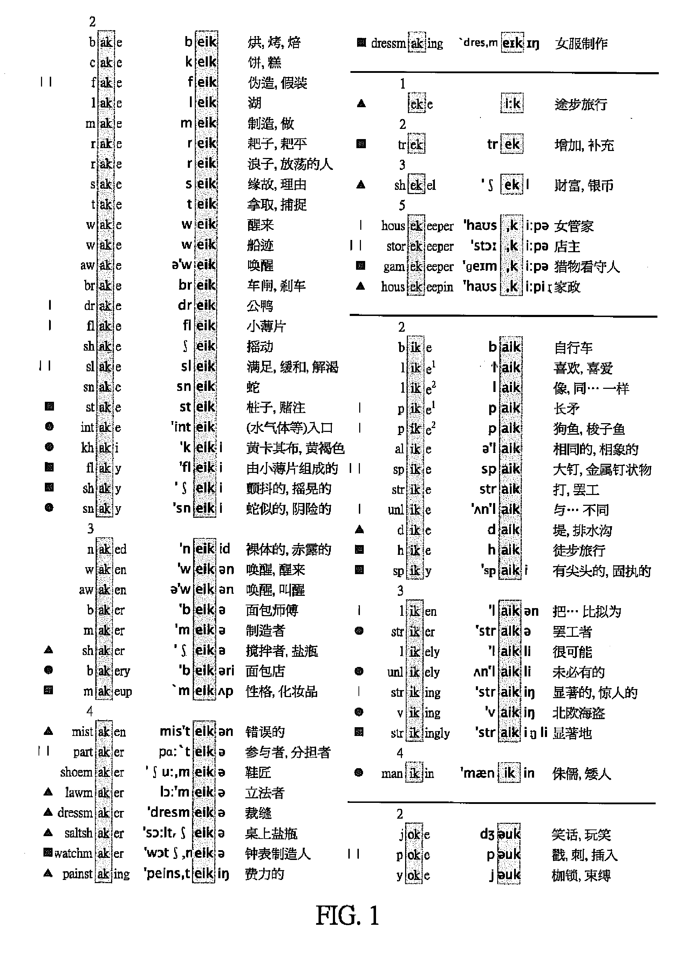

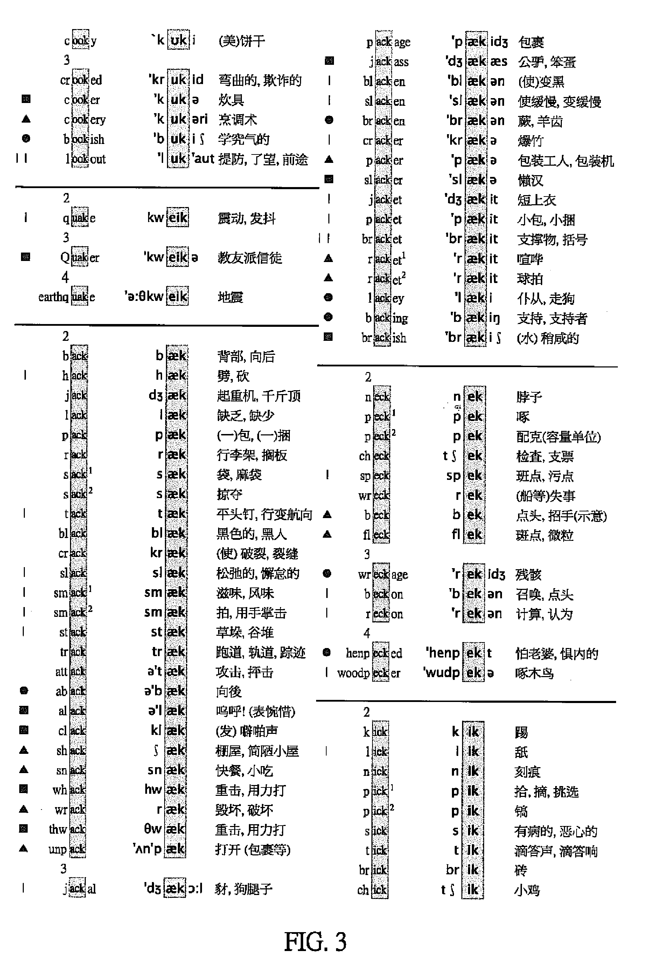

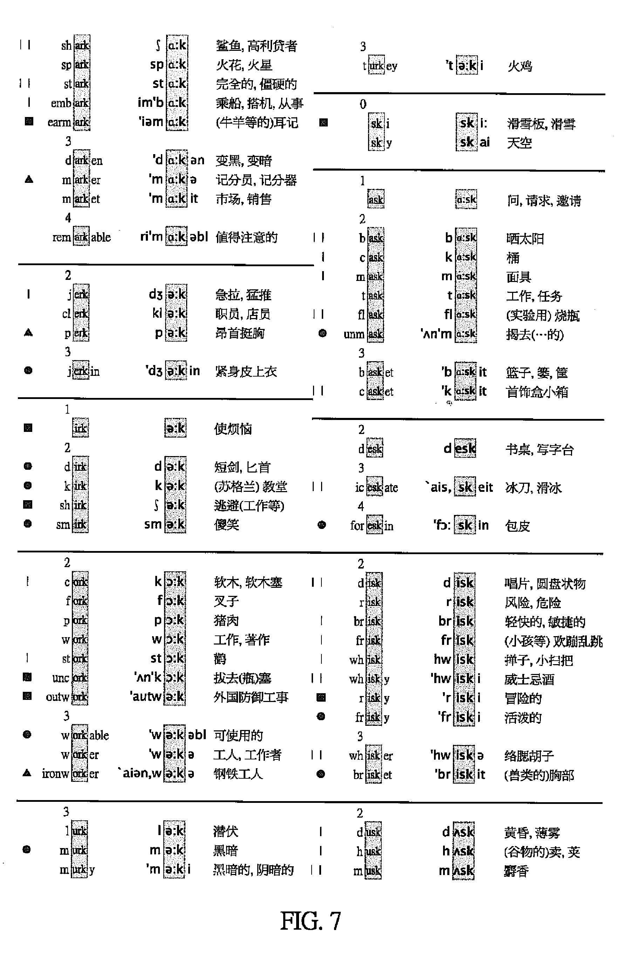

The technical solution of the present invention is to split each of vocabulary words in various dictionaries into groups, and each vocabulary word only has one maternal line, and then the words are classified and sorted according to maternal lines.
1. Splitting each word into a plurality of groups, each group consists of vowels (monophthong or diphthong) and following consonants (or double consonant), and only one group among the plurality of groups is a maternal line, the consonants of the maternal line are called Zili, and the vowels of the maternal line are called Muyuan.
2. The middle group or the center right group of each word is the maternal line.
3. The sorting of the consonants (namely the Zili) of the maternal lines comprises that the single consonants (Zili) are sorted in order, and the consonants before the single consonants are sorted, and so on. With reference to Figs. 1-8, the sequence of the consonants is: k, ck, Ik, nk, rk ..... and the last Zili is cksk, k is Zili, the consonants before the Zili k pertain to the k, the first vowel of the maternal line is Muyuan, and the following vowels pertain to the Muyuan.
4. A very few words don't constitute a group, such as the words "ski" and "sky" shown in the upper right of Fig. 7, and these words should also be arranged in the grey column according to the sequence of Zili.
5. The sorting of the vowels (Muyuan) of the maternal lines comprises that a consonant with the monophthong (Muyuan) is sorted, and then a consonant with the diphthong (Muyuan) before the consonant is sorted, and so on. As shown in Figs. 1-2, the single Zili k with the monophthong (Muyuan) before the Zili k is sorted, and then the Zili with the diphthong is sorted, see Fig. 3.
6. how to split a word into groups:
   Splitting a word into groups by starting from left to right, each group must consist of vowels and consonants, and connected vowels or consonants must be in the same group, and so on.

The first letter of the word will constitute a group together with the following constant if it is a vowel or connected vowel.

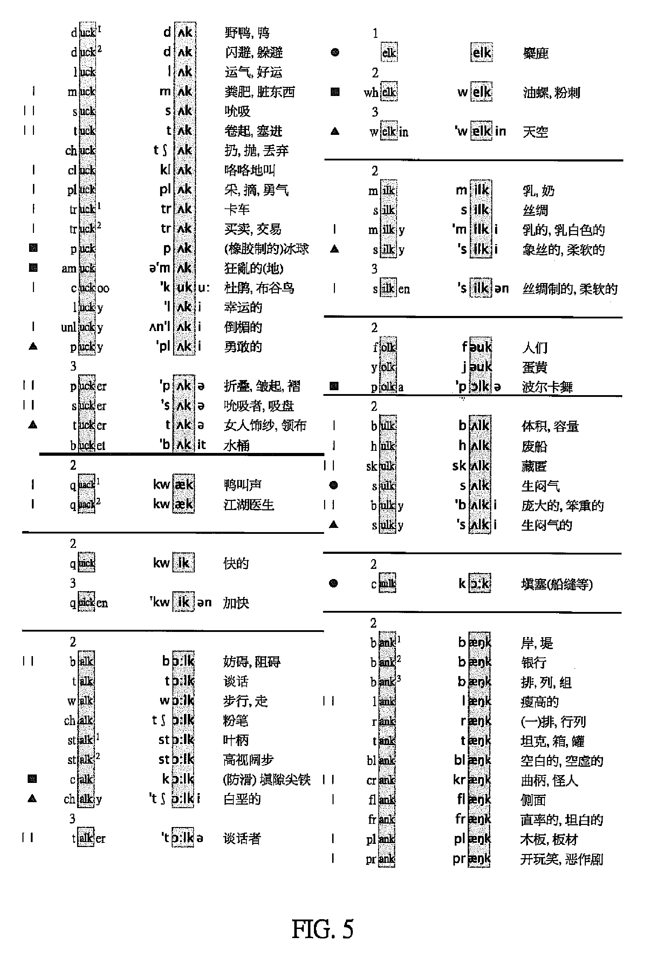

The first letter of the word will be considered as a group if it is a consonant or connected consonant, a second group starts from vowels again in the abovementioned manner, and if the last letter left is a vowel, it doesn't constitute a group
7. "Y" is a semivowel and serves as a consonant when it is the first letter of a word, when it is not the first letter of a word and the letter before "Y" is a consonant, the "Y" serves as a vowel, otherwise, it serves as a consonant, see the "Y" after and before the maternal line at the right of Fig. 5.
8. Confirmation of the maternal line:

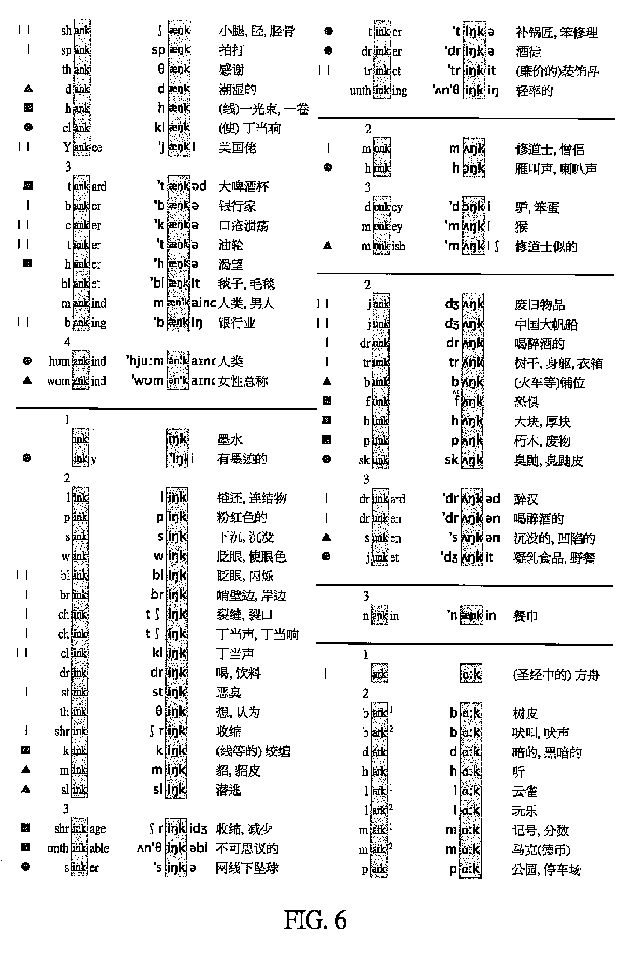

I. the words each comprises only one group, the group is the maternal line and also includes the only vowel following the maternal line, see the words "ink" and "inky" in the middle of Fig. 6.

The words each comprise two groups, and the second group is the maternal line; see the words below the number "2" at the upper left of Fig. 1.

The words each comprise three groups, and the second group is the maternal line; see the words below the number "3" at the lower middle left of Fig. 1.

The words each comprise four words, and the third group is the maternal line; see the words below the number "4" at the lower left of Fig. 1.

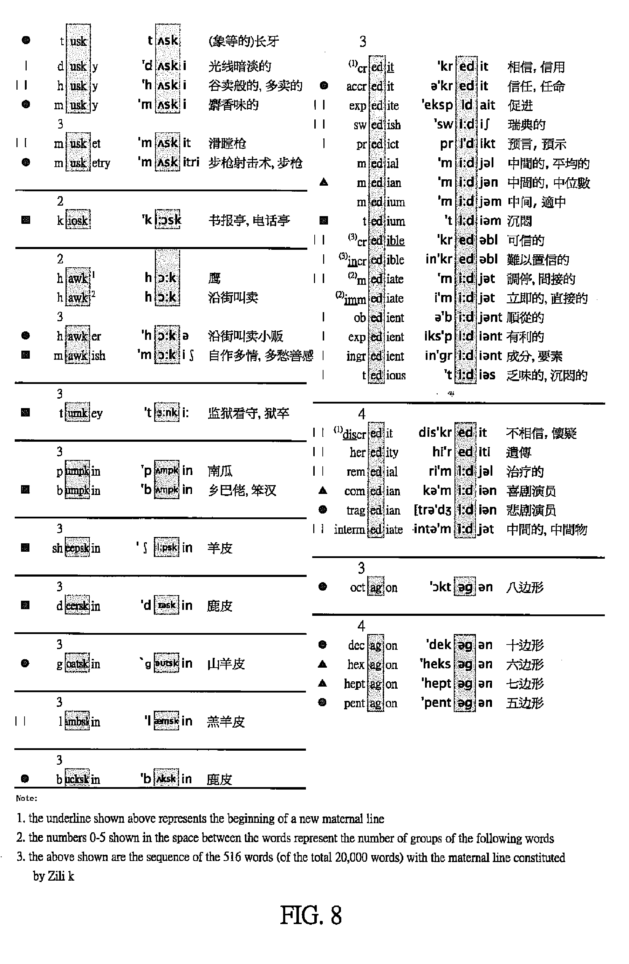

The middle group is the maternal line when the word contains an odd number of groups, and the center right group is the maternal line when the word contains an even number of groups.
II. All the maternal lines and the phonetic symbols of all the maternal lines should be arranged in the two colored columns according to the sorting order, see all Figs.
III. The letters following the maternal line are sorted in the manner of alphabetical order of the monophthong first and the letter number next, and then are sorted in the manner of alphabetical order of the diphthong and the letter number, and so on (as shown in Figs. 1-8), in case that the numbers of letters are the same, it should be sorted in the alphabetical order of the last letter. See the sorting order of the three words (4-6) following the maternal line as shown at the right of Fig. 8.
IV. The letters before the maternal line are sorted in the alphabetical order of the letters following the maternal line, see how the sorting order after the maternal line is related to that before the maternal line, in case that no letters following the maternal line or the letters following the maternal line are the same, the letter before the maternal line are divided into upper part and lower part according to use rate, and sorted according to the order of the letter number and then according to the alphabetical order (the letters with a higher use rate are sorted before those with a lower use rate).

The system of the present invention comprises display, display drive circuit, keyboard, storage device, program module, disc drive, and CPU. The words are classified and sorted according to material lines, writing software, saving program or burning it into optical disks which can be read by machine and displayed on the display.

The method of the present invention can be applied to computers and used to memorize words or compile story.

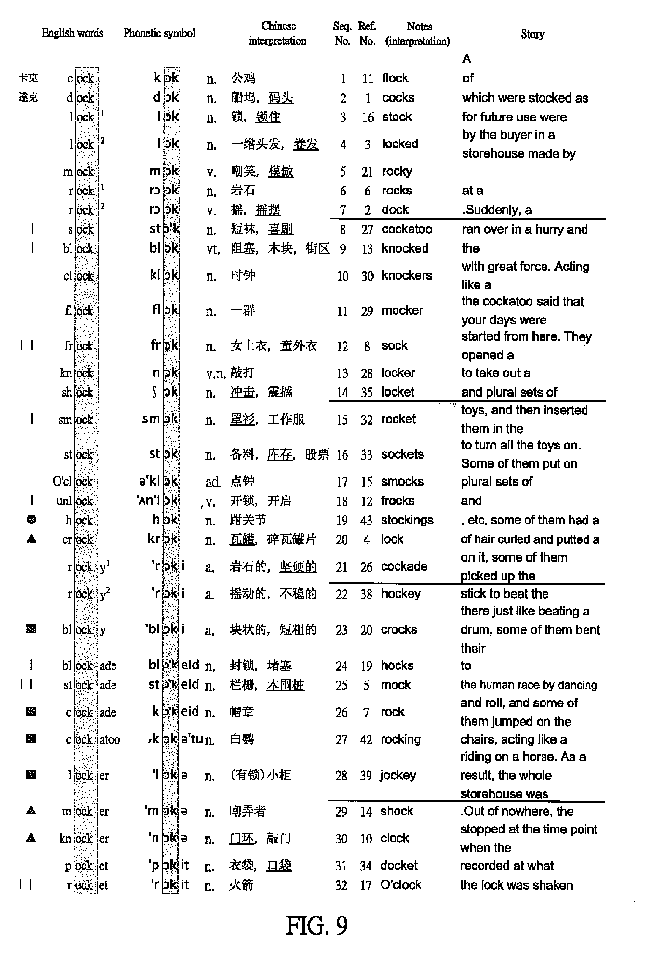

Due to the abovementioned sorting and classifying method, the present invention has many useful characteristics and effects, for example:
I. classifying the words: different maternal lines form many different kinds of words.
   1. simple words: the sorting and grouping of the words according to maternal lines make the simple words naturally form at the beginning of each of the maternal lines. These simple words important to new learners and comprise a lot of etyma, allowing the user to gradually learn more words consisting of more letters by starting from these simple words, creating a progressive memory system, see the beginning of the maternal lines in Figs. 1-8.
   2. derivative words:
      ①prefixes: the underlined letters, such as the four words with underlined prefixes as shown from the right of Fig. 8, and these words are shown in the same maternal line, making them easy to see.
      ②suffixes: most suffixes start from the vowels following the maternal line, you'll have an understanding after comparing the suffixes with the letters before the suffixes, see the letters following the maternal lines in Figs. 1-8. A few of suffixes start from the Zili, such as the five words at the lower right of Fig. 8, the suffix is "gon" (which means angle), "g" is a consonant which constitutes the maternal line "ag" together with the last letter "a" of the number premix (indicating a number), making the words easy to recognize and remember.
      ③compound words: many compound words are formed from the end of each of the Zili, such as the words in Fig. 8 (the end of the Zili b), the dividing line of all these words is obviously the Zili "b" of the maternal line (the underlined letters starting from "b" constitute another word), and these compound words are naturally composed of two words. This is because the number of the consonants of the Zili gradually increases while the number of the constituted maternal line will reduce, naturally forming the group of the compound words.
   II. editing story: the user can make up a story by selectively editing the words together according to the notes to the words and the use rate code (or according to the grade code of the words in the textbook), which converts the boring memorization into fun. See the example as shown in Figs. 9-10, in this maternal line, the user can number the selected old and new words in the sequence column, and use the notes to these words to make up a story in the form of sentence making. When reviewing the story, the user will think of the spelling of the words based on the notes, if forget the spelling of the words, the user can trace the sequence number and the reference number before the notes to find the spelling which is just located in front of the sequence number. If the story is too long, it can be paragraphed in such a manner that every few words can be divided into a paragraph, and then the paragraph is marked with paragraph mark, the note before the paragraph serves as its subtitle.
   III. Phonetic symbol comparison: there are totally two colored columns in this present invention: one for showing the maternal lines of the words, and the other for showing the phonetic symbol of the maternal lines. The user can do comparison between the two colored columns to find when the pronunciations of the maternal lines are different or the same, and then the user can write out the pronunciations in front of the words in his own way, for example, the words marked with " 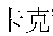 " and " 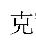 " at their upper left corners, as shown in Fig. 9. Comparison shows that the pronunciations are almost the same when the letters of the maternal lines are the same (the user can indirectly learn the phonetic symbol). For example, if there is only a letter "e" or no letter after the maternal line, the word with the maternal line is not marked with an accent mark. Since the letters of the maternal lines are the same, the user can check by comparison and find which syllable should be stress or accented. For example, some letters are silent or secondary accents in some circumstances. Meanwhile, the phonetic symbol comparison further helps association and memorization of the words.
   IV. the editing and forming of the maternal lines itself has created multiple memory systems, and on this basis of the maternal line, the user's editing story, association of new words with familiar words, phonetic comparison, classification of words, and etc will definitely create a strong associative memory system, because these all come from the maternal lines, and the maternal lines are resulted from the grouping, classifying and sorting of the diversified and dispersed words. Each of the maternal lines is unique and independent, each maternal lines forms a system, and all the words of the dictionary are marked with a colored column with section break and a colored column with phonetic symbols. All words are longitudinally arranged in the dictionary in the order of the maternal lines, and each of the words is horizontally arranged in the maternal lines in a manner of Guixi, creating a complete system. Therefore, the word to be memorized serves as a core word, and then an association can be created based on the maternal line of this word to enable the user to easily memorize the peripheral words.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.
I. Arrangement of the Zili of the maternal lines:
   An example of arrangement and sorting of a part of the words of the present invention is shown in Figs. 1-11, which show the sorting and classifying of the words according to the Zili "k" of the maternal lines. The sorting of the Zili of the maternal lines comprises that the single Zili "k" and the various vowels (monophthong first and then diphthong) before the single Zili are sorted, and then "ck", "lk", "nk", "pk", "rk", "sk", respectively cooperate with the various vowels before them to constitute their respective maternal lines. Therefore, the number of the maternal lines is determined by the Zili. It is clear from the above description that the arranging and forming of the Zili has its rule, as shown in Figs. 1-8, so does the Zili of other maternal lines.
II. each maternal line is constituted by Muyuan (vowels or following vowels) and Zili (the last consonant of the maternal line or the consonants before the Zili), therefore, when compiling a dictionary or software based on the maternal lines, no matter how many words, the words must be sorted and classified based on the combination of the five and a half vowels (Y is a semivowel) and the 21 Zili.
III. maternal lines are divided from the words. The simplest way to find the maternal line of a certain word from the dictionary of the present invention is that the maternal line is the last group if there are only a few letters. It is clear that there is only one group, for example, at the beginning of Fig. 1 or the beginning of the respective maternal lines. If the word consists of several groups, the last group can be given up, and the maternal line is the second group from the last since the group will serve as the maternal line as long as there are one or two groups before the maternal line. If there are more than two groups before the maternal line, the maternal line is basically in the third group from the last. Because only one word in this dictionary comprises 7 groups, and the maternal line is the middle fourth group and there are three groups before and after the maternal lines, respectively. For example: the 17-letter word "constitutionality" comprises 7 groups, and its maternal line is "ut". This word comprises so many letters though, once its maternal line is confirmed, the groups before and after the maternal line will produce memory gene, which cooperates with the new and old words of the maternal lines to create an associative memory system.
IV. the factors causing memorization and association of the words are the maternal lines, and the maternal lines come from the grouping of the words. The words are split into groups and sorted and classified according maternal lines. People traditionally think that for a string of meaningless unrelated numbers or letters, the easiest part to remember is the beginning, and then the end, but the middle part is the most forgettable. The maternal lines of the present invention, however, totally disprove this traditional opinion. According to the present invention, the middle part of the words has become the easiest part to remember since it serves as the maternal line shared by many words.

The characteristics and use of the present invention:

Each of the maternal lines is unique and independent, so it can be applied to Guixi system which comprises display, display drive circuit, keyboard, storage device, program module, disc drive, and CPU, the words are classified and sorted according to material lines, the maternal lines are written into software and burned into optical disks which can be read by machine and displayed on the display.

The word with the maternal line can be displayed n the display by inputting the maternal line.

### I. maternal line input method:

The corresponding word will be displayed on the display along with its group simply by inputting the first and last letters (the middle letters will be substituted by the first and last letters) of the maternal line. For example:

### 1. looking up the word "bakery"

According to the rule, this word comprises three groups, "b" is a group, "ak" is a group (maternal line), and "ery" is a group. See Fig. 1, the seventh word of the third group in the first line. Looking up the word "bakery" comprises the following steps:
a. reading the optical disk, inputting the letters "ak" of the maternal line.
b. pressing "ENTER", the number of groups and words of the maternal line will be displayed on the display.
c. this word is in the third group, when the mouse slides to the seventh word "bakery" in the third group, the meaning of this word will be displayed on the display, and the word can also be saved in the memory of the computer.
d. to memorize part of or all the new words of this maternal line, you save the words of the 2-4 groups in the memory of the computer while considering the use rate before the words (or according to the grade of the words in the textbook).
e. the user can make up a story by selectively editing the words together according to the notes to the words, which not only improves writing skills but also converts the boring memorization into fun. When reviewing the story, the user will think of the spelling of the words based on the notes.
f. the abovementioned concept shows that the words which only contain one or two groups are normally simple words, while the words containing three, or four or even more groups are derivative words and compound words. The user can do the comparison between different groups of the same maternal line to find the interrelation of the words. If more new words are needed during editing, prefix or simple words can be added to the third group to constitute new words, however, the maternal line basically doesn't change.

### 2. looking up the words "outbreak"

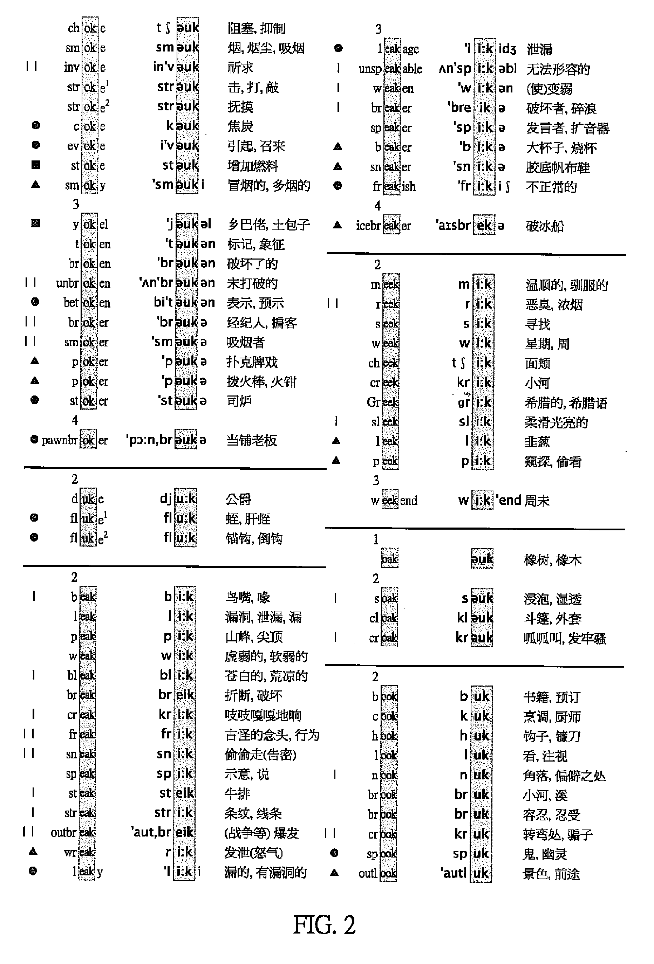

According to the rule, this word has two groups, "outbr" is a group (including two consecutive vowels and three consecutive constants), "eak" is a group (maternal line). See Fig. 2, the 13th word of the second group in the first line. looking up the word "outbreak" comprises the following steps:
a. reading the optical disk, inputting the letters "eek" of the maternal line (e substitutes for a).
b. pressing "ENTER", the number of groups and words of the maternal lines "eak, eek" will be displayed on the display, for example:

| | | | |
|---|---|---|---|
| eak | 2 groups (15 words) | 3 groups (8 words) | 4 groups (1 word) |
| eek | 2 groups (10 words) | 3 groups (1 word) | |

c. The menu will be displayed when the mouse points at the second group of the "eak", when the mouse slides to the 13th word "outbreak" in the second group, the meaning of this word will be displayed on the display, and the letters "d, e, f" are the same as above.

### 3. looking up the word "unthinkable"

According to the rule, the word "unthinkable" comprises three groups: "unth", "ink" which is the maternal line, and "able", see Fig. 6, the secon word of the third group in the first line. Looking up the word "unthinkable" comprises the following steps:
a. inputting the letters "ikk" of the maternal line (the middle k substitutes for the Zili n).
b. pressing "ENTER", the number of groups and words of five maternal lines "ick", "ilk", "ink", "irk" and "isk" will be displayed on the display.
c. The menu will be displayed when the mouse points at the third group of the "ink", when the mouse slides to the 13th word "unthinkable" in the third group, the meaning and phonetic symbol of this word will be displayed on the display, and the letters "d, e, f" are the same as above.
d, repeating the step "b" can look up the words of other five maternal lines.

### II. Zili input method:

Just by inputting one or more same consonants (Zili) and pressing "ENTER" (without having to input the vowels (Muyuan)), all the maternal lines consisting of the Zili and the various monophthongs (Muyuan) will be displayed on the display, and meanwhile, the number of the groups and words of each maternal line will also be displayed.

For example, looking up the word "bakery" which contains three groups, the maternal line is "ak".
a, reading the optical disk, inputting the Zili "k", the maternal lines constituted by the Zili "k" will be displayed on the display.

| | | | |
|---|---|---|---|
| ak | 2 groups (24 words) | 3 groups (8 words) | 4 groups (9 words) |
| ek | 1 group (1 word) | 2 groups (1 word) | 3 groups (1 word) |
| | 5 groups (4 words) | | |
| ik | 2 groups (12 words) | 3 groups (7 words) | 4 groups (1 word) |
| ok | 2 groups (12 words) | 3 groups (10 words) | 4 groups (1 word) |
| uk | 2 groups (3 words) | | |
| eak | 2 groups (15 words) | 3 groups (8 words) | 4 groups (1 word) |
| eek | 2 groups (10 words) | 3 groups (1 word) | |
| oak | 1 group (1 word) | 2 groups (11 words) | 3 groups (5 words) |
| uak | 2 groups (1 word) | 3 groups (1 word) | 4 groups (1 word) |

b. the above is like a small catalogue, the user can click the third group "ak" in the first line with the mouse since the maternal line "ak" is the third group.
c. the menu of this group will be displayed, and the rest is the same as the maternal line input method.
2, looking up the word "outbreak" which comprises 3 groups, and its maternal line is "eak", pressing "k" and then "enter", words with "a" will be displayed, the user then clicks the third groups "eak", the menu will be displayed, and the rest is the same as the maternal line input method.
3. looking up the word "unthinkable" which comprises 3 groups, and the maternal line is "ink".
a, reading the disk, pressing the Zili "nk", and then the following contents will be displayed on the display:

| | | | |
|---|---|---|---|
| ank | 2 groups (19 words) | 3 groups (8 words) | 4 groups (2 words) |
| ink | 1 group (2 words) | 2 groups (16 words) | 3 groups (7 words) |
| onk | 2 groups (2 words) | 3 groups (3 words) | |
| unk | 2 groups (9 words) | 3 groups (4 words) | |

b, clicking the mouse at the third group "ink" in the second line since the "ink" comprises three groups.
c. the menu will be displayed, and the rest is the same as the maternal line input method.

### III. maternal line input method:

The corresponding word will be displayed on the display along with its group simply by inputting the whole letters (including Muyuan and Zili) of the maternal line, and then by pressing "ENTER", meanwhile, the number of groups of this maternal line will also be displayed.

For example, looking up the "unthinkable" which comprises 3 groups, and the maternal line is "ink".
a, reading the optical disk, pressing "ink", the number of groups and words will be displayed.
b, clicking the mouse at the third group, the menu of this group will be displayed, and the rest is the same as the maternal line input method.

The present invention aims at enhancing international science/technology and culture exchange, and the economic and trade development. The idea of the present invention can be traced back to before Christ era, where the Chinese ancient culture heritage-Taiji diagram was born. The maternal line is just like the Taiji diagram: Yin (Muyuan) on one side, Yang (Zili) on the other, and the S line in the middle is half Yang and half Yin, (just like semivowel y, and the "y" in the maternal line transforms from Yin (Muyuan) into Yang (Zili)).

Daoism believes that the original world was Wuji (motionless) and in absolute balance before it was born, Wuji transformed into Yin and Yang, and the myriad creatures were born from the balance between Yin and Yang.

The symbol of the maternal lines of the present invention comprises Yin (which is the letter "A" black ground) on one side, Yang (the letter "Z" white background), and the dividing line in the middle is half Yang and half Yin, (a reversed "Y").
II. the Zili input method (first one of the system memory mythologies): this input method is only applied to the maternal line which consists of a Zili consisting of 1-5 consonants and a monophthong (Muyuan) before the Zili. Therefore, just by inputting one or more same consonants (Zili) and pressing "ENTER" (without having to input the vowels (Muyuan)), all the maternal lines consisting of the Zili and the various monophthongs (Muyuan) will be displayed on the display, and meanwhile, the number of the groups and words of each maternal line will also be displayed. The words with those maternal lines are main part of the memory of this dictionary and occupy more than 85% of the total 20,000 vocabulary words of this dictionary, so that the maternal lines can be fully utilized to systematically and orderly edit the words, making it easy to memorize the words, with reference to "2. the looking-up of the maternal lines consisting of single consonant k (Zili) and the diphthong (Muyuan) before the Zili" which is to be explained in the later part of the application.

The user can look up the maternal lines which consist of the 21 single consonants (Zili) (ranging from the Zili b to z) or consonants consisting of plural consonants and the monophthong (Muyuan) before the Zili. For example:
Looking up the maternal lines consisting of the single consonant b and the monophthongs before the single consonant b comprises the following steps:
① reading the optical disk, and inputting the letter "b" through the keyboard;
② pressing "ENTER", all the maternal lines consisting of the Zili b and the various monophthongs (Muyuan) before the Zili, and the number of groups and the number of words will be displayed on the display, as shown below for example:

| | | | | |
|---|---|---|---|---|
| b | 0 group (8 words) | | | 8 |
| ab | 2 groups (12 words) | 3 groups (10 words) | 4 groups (10 words) | |
| | 5 groups (8 words) | 6 groups (1 word) | | 57 |
| eb | 2 groups (1 word) | 3 groups (23 words) | 4 groups (13 words) | 37 |
| ib | 2 groups (16 words) | 3 groups (22 words) | 4 groups (10 words) | |
| | 5 groups (17 words) | 6 groups (3 words) | | 68 |
| ob | 2 groups (17 words) | 3 groups (12 words) | 4 groups (8 words) | |
| | 5 groups (5) | | | 42 |
| ub | 2 groups (4 words) | 3 groups (14 words) | 4 groups (10 words) | |
| | 5 groups (4 words) | 6 groups (2 words) | | 36 |
| yb | 3 groups (2 words) | 4 groups (2 words) | | 4 |
| | | | 252 words in total | |

Drawings for the words associated with the above maternal lines are omitted (please refer to Figs. 1-8).
2. Looking up the maternal lines consisting of the single consonant k comprises the following steps:
① reading the optical disk, and inputting the letter "k" through the keyboard;
② pressing "ENTER", all the maternal lines consisting of the Zili k and the various monophthongs (Muyuan) before the Zili, and the number of groups and the number of words will be displayed on the display, as shown below for example:

| | | | | |
|---|---|---|---|---|
| ak | 2 groups (24 words) | 3 groups (8 words) | 4 groups (9 words) | 41 words |
| ek | 1 groups (1 word) | 2 groups (1 word) | 3 groups (1 word) | |
| | 5 groups (4 words) | | | 7 words |
| ik | 2 groups (12 words) | 3 groups (7 words) | 4 groups (1 word) | 20 words |
| ok | 2 groups (12 words) | 3 groups (10 words) | 4 groups (1 word) | 23 words |
| uk | 2 groups (3 words) | | | 3 words |
| as shown in Figs. 1-2 | | | 94 words in total | |

3. Looking up the maternal lines (such as ck, lk) consisting of the double consonant k, comprises the following steps:
① reading the optical disk, and inputting the letters "kk" (the k before k is code for any consonants) through the keyboard;
② pressing "ENTER", all the maternal lines and the number of words will be displayed as follows:
ck ack (43 words) eck (13 words) ick (42 words) ock (45 words) uck (23 words)

| | | | | | | |
|---|---|---|---|---|---|---|
| | | | | | | 166 in total |
| lk | alk (9 words) | elk (3 words) | ilk (5 words) | olk (3 words) | ulk (6 words) | 26 |
| nk | ank (29 words) | | ink (25 words) | onk (5 words) | unk (words) | 72 |
| pk | ank (1 word) | | | | | 1 |
| rk | ark (19 words) | erk (4 words) | irk (5 words) | ork (10 words) | urk (4 words) | 42 |
| sk | (2 words) ask (9 words) | esk (3 words) | isk (10 words) | | usk (9 words) | 34 |
| wk | awk (4 words) | | | | | 4 |
| | | | | | 345 words in total | |

### As shown in Figs. 3-8

③clicking any of the maternal lines, such as "ack", the 43 words with the maternal line will be displayed on the display, wherein the words can be selected according to use rate (or according to the grade of the words in the textbook) to form a story.

As shown in the lower left and upper right of Fig. 3.

Inputting three "k" through the keyboard, three words will be displayed as shown at the middle front of Fig. 8.

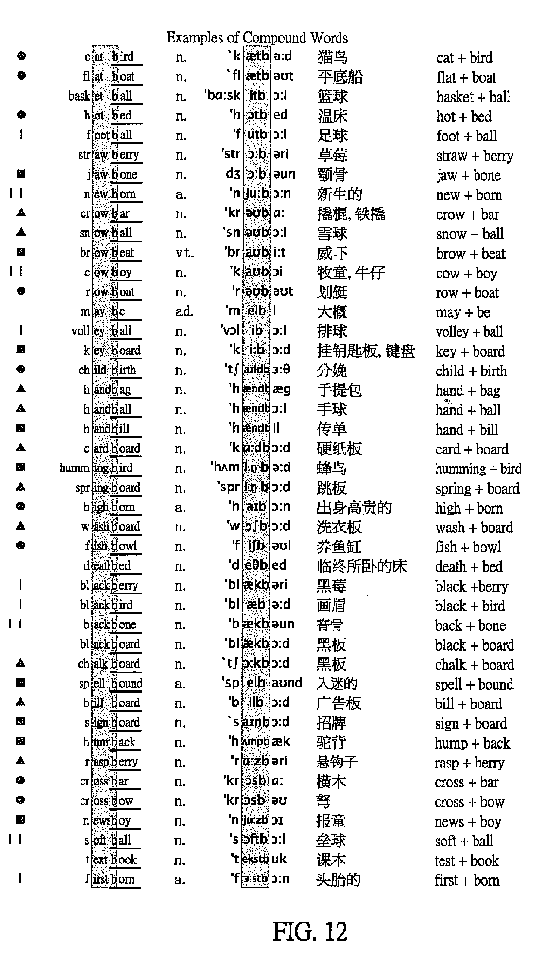

By typing four "k" on the keyboard, a word will be displayed as the last word at the left of Fig. 8.
4. Looking up the maternal lines which consist of the Zili consisting of three consonants and the monophthong (Muyuan) before the Zili, such as "- - b", comprises the following steps:
   ① reading the optical disk, and inputting three consonants "b" (Zili) through the keyboard;
   ② pressing "ENTER", the words with the maternal lines starting from "ildb" as shown in the middle of Fig. 12 to the "extb" will be displayed on the display, and the last word consists of four connected consonants (Zili) (by consecutively pressing the key "b" four times).

By consecutively pressing the key "b" two times and then pressing "ENTER", the group of words with the maternal lines starting from "eyb" to the "atb" as shown in the Fig. 12 will be displayed, it can be seen that the end of the respective Zili can be seen, the number of words with the maternal lines gradually reduces, and the maternal lines will form more compound words.

The above is the example of the maternal lines formed by some Zili and the respective monophthong (Muyuan) before the Zili, wherein the number of the groups and number of words of each maternal line are provided for your reference when editing a story.

### III. Muyuan input method (one of the system memory mythologies):

For easy memorization, all the words with the maternal lines which consist of diphthong (Muyuan) and various single consonants or more (Zili) are orderly sorted out from the words of this dictionary to constitute another system, which occupies almost 15% of the total words of this dictionary.

The input of the vowels (Muyuan) of these maternal lines is by consecutively typing two "a" (code for any diphthongs), since the combination consisting of a vowel (Muyuan) and a consonant (Zili) is included in the Zili input method, and the words consisting of three consecutive vowels (Muyuan) are only 60 words of the total 20,000 words associated with the Muyuan input method, simply consecutively typing or pressing "a" three times can make the whole 60 words appear on the display screen. Hence, the Muyuan of this series are all diphthongs (Muyuan). For example:
1. looking up the maternal lines consisting of single consonant (Zili) d and the diphthong (Muyuan) before the Zili comprises the following steps:
① reading the optical disk, and inputting "aa" first and then "d";
② pressing "ENTER", all the maternal lines and the number of words will be displayed as follows:

| | | | | |
|---|---|---|---|---|
| aid | 2 groups (10 words) | 3 groups (3 words) | 4 groups (1 word) | 14 |
| aud | 2 groups (5 words) | 3 groups (5 words) | 4 groups (2 words) | 22 |
| ead | 2 groups (23 words) | 3 groups (15 words) | 4 groups (2 words) | 40 |
| eed | 2 groups (23 words) | 3 groups (8 words) | 4 groups (1 word) | 32 |
| eud | 2 groups (1 word) | 3 groups (1 word) | | 2 |
| iad | 2 groups (1 word) | 3 groups (2 words) | | 3 |
| ied | 2 groups 2 words) | | | 2 |
| iod | 4 groups (1 word) | 5 groups (1 word) | | 2 |
| oad | 2 groups (9 words) | 3 groups (1 word) | | 3 |
| oid | 2 groups (2 words) | 3 groups (3 words) | | 5 |
| ood | 2 groups (13 words) | 3 groups (4 words) | | 17 |
| oud | 2 groups (7 words) | 3 groups (1 word) | | 8 |
| uad | 2 groups (1 word) | | | 1 |
| ued | 2 groups (1 word) | 3 groups (1 word) | | 2 |
| uid | 2 groups (2 words) | 3 groups (3 words) | 4 groups (1 word) | 6 |
| yad | 2 groups (1 word) | | | 1 |
| | | | 160 words in total | |

③looking up double consonant (Zili) requires pressing two "a" (code for any diphthongs) and then pressing two "d" (the d before d is a code for any single consonant), and then the following contents will appear on the display:

| | | | | |
|---|---|---|---|---|
| ield | 2 groups (7 words) | 3 groups (1 word) | | 5 |
| ould | 2 groups (6 words) | 3 groups (3 words) | | 9 |
| uild | 2 groups (2 words) | 3 groups (4 words) | 4 groups (4 words) | 7 |
| aind | 2 groups (1 word) | 3 groups (1 word) | | 2 |
| aund | 3 groups (3 words) | | | 3 |
| eand | 3 groups (2 words) | | | 2 |
| eimd | 2 groups (1 word) | | | 1 |
| iend | 2 groups (2 words) | 3 groups (1 word) | | 3 |
| oond | 2 groups (1 word) | | | 1 |
| ound | 2 groups (19 words) | 3 groups (9 words) | 4 groups (1 word) | 29 |
| uamd | | 3 groups (3 words) | | 3 |
| uend | 2 groups (1 word) | | | 1 |
| uond | | 3 groups (1 word) | | 1 |
| aird | 2 groups (2 words) | | | 2 |
| eard | 2 groups (3 words) | 3 groups (1 word) | | 4 |
| oard | 2 groups (4 words) | 3 groups (1 word) | | 5 |
| uard | 2 groups (1 word) | 3 groups (1 word) | | 2 |
| | | | 81 words in total | |

Drawings for the words associated with the above maternal lines are omitted (please refer to Figs. 1-8).
2. The looking-up of the maternal lines consisting of single consonant k (Zili) and the diphthong (Muyuan) before the Zili comprises the following steps:
① reading the optical disk, and consecutively pressing "a" two times (code for any diphthongs) first and then pressing "k";
② pressing "ENTER", all the maternal lines and the number of words will be displayed as follows:

| | | | | |
|---|---|---|---|---|
| eak | 2 groups (15 words) | 3 groups (8 words) | 4 groups (1 word) | 24 words |
| eek | 2 groups (10words) | 3 groups (1 word) | | 11 words |
| oak | 1 groups (1 word) | 2 groups (3 words) | | 4 words |
| ook | 2 groups (11 words) | 3 groups (5 words) | | 16 words |
| uak | 2 groups (1 word) | 3 groups (1 word) | 4 groups (1 word) | 3 words |
| | | | | 58 words in total |

③ clicking any of the maternal lines, such as "eak", the 24 words with the maternal line will be displayed on the display, wherein the words can constitute a story according to use rate (or according to the grade of the words in the textbook).

The above are the maternal liens consisting of diphthong (Muyuan) and the following single consonant k (Zili), as shown in Figs. 2 and 3.

### IV. system input method (compound memory):

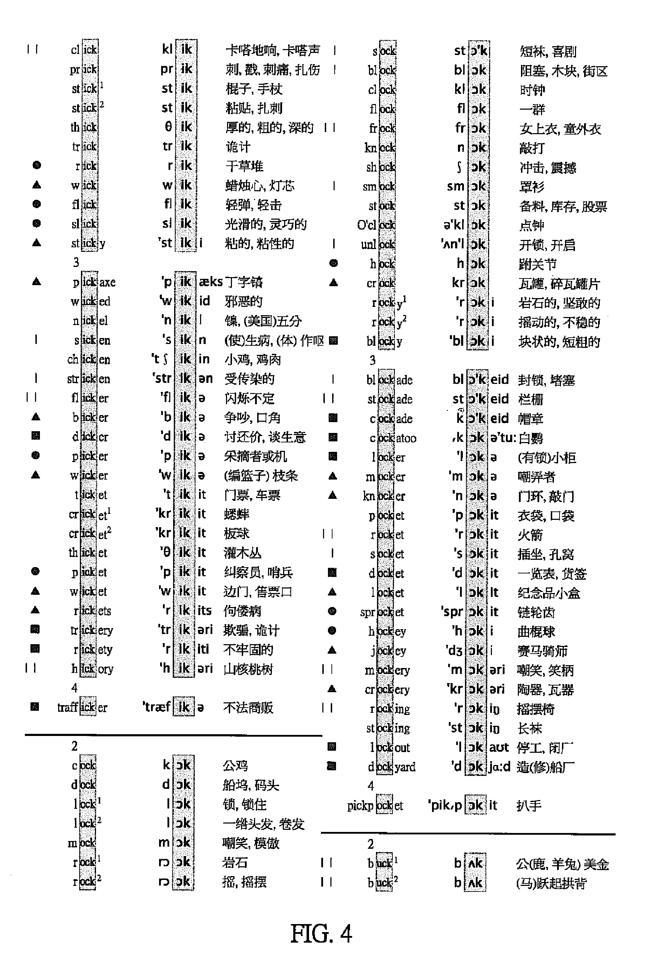

This input method is based on the sequence of the whole words of this dictionary, simply inputting any maternal line, all the words with this maternal line (including peripheral words) will be displayed on the display screen, but all the letters before and following the maternal line are covered with a blank window, or all the letters before the maternal line are covered by the blank window, or all the letters following the maternal line are covered by the bland window, at user's discretion. Clicking the mouse to open the blank window, the words hidden in the blank window can be displayed (since the order of the notes to the words might be reversed or disarranged when editing a story). The user can review the words according to this words order of the dictionary to check out the memory effect. For example, the looking up of the maternal line "ock" (referring to the lower upper and right of Fig. 4) comprises:
①reading the optical disk, inputting "ock", and then all the words with this maternal line and their notes (meanings) will be displayed in the order of the words of this dictionary of the present invention (at this moment, the blank windows before and following the maternal line can be opened at the user's discretion).
②checking the words by sliding down the mouse, thinking of the spelling of a certain word based on the notes to the words, and just by clicking the mouse to the black window, the user can check the letters before and following the maternal line if forget the spelling.
③another example: when looking up the maternal lines "uack" or "uick", which belongs to the same family (Zili ck) with the Zili of the "ock" and falls into the scope of the Muyuan input method. However, "ock" is within the scope of the Zili input method, so the words with the "uick" can also be placed below the "ock" and "uck", as shown in Figs. 9-11, and so on. The three input methods of the present invention can be incorporated with one another, or reedited based on the user's own memory method to achieve a better memorization effect.

To sum up, the differences of the four input methods are stated below:
1. Maternal line input method: only inputting the whole letters of the maternal line, the vowels following the maternal line and the number of groups.
2. Zili input method: only inputting the Zili of the maternal line (for the Zili consisting of plural consonants, inputting the last consonant (Zili), number of times of pressing (code) (for more details see above).
3. Muyuan input method: only inputting two "a" (code) and the following Zili, for the Zili consisting of plural consonants, inputting the last consonant (Zili), number of times of pressing (code) (for more details see above).
4. System input method: only inputting the whole letters of the maternal line.

Note: all above four input methods are capable of sorting any word out of the dictionary of the present invention, or using the sorted words as a headword or keyword to make a story. These input methods help you achieve your writing potential and arouse your writing passion, making the user more happy and confident to memorize the words with ease.

### BRIEF DESCRIPTION OF THE DRAWINGS

Fig. 1 shows the maternal lines and phonetic symbols of a part of the words of the present invention;
Fig. 2 shows the maternal lines and phonetic symbols of a part of the words of the present invention;
Fig. 3 shows the maternal lines and phonetic symbols of a part of the words of the present invention;
Fig. 4 shows the maternal lines and phonetic symbols of a part of the words of the present invention;
Fig. 5 shows the maternal lines and phonetic symbols of a part of the words of the present invention;
Fig. 6 shows the maternal lines and phonetic symbols of a part of the words of the present invention;
Fig. 7 shows the maternal lines and phonetic symbols of a part of the words of the present invention;
Fig. 8 shows the maternal lines and phonetic symbols of a part of the words of the present invention;
Fig. 9 shows the example of making up and editing story and phonetic symbol comparison;
Fig. 10 shows the example of making up and editing story and phonetic symbol comparison;
Fig. 11 shows the example of making up and editing story and phonetic symbol comparison;
Fig. 12 shows the examples of compound words;
Fig. 13a is an illustrative view of the maternal lines; and
Fig. 13b is another illustrative view of the maternal lines.

Muyuan are vowels and called Muyuan in maternal lines, and consonant in maternal lines are called Zili.

The present invention aims at enhancing international science/technology and culture exchange, and the economic and trade development. The idea of the present invention can be traced back to before Christ era, where the Chinese ancient culture heritage-Taiji diagram was born. The maternal line is just like the Taiji diagram: Yin (Muyuan) on one side, Yang (Zili) on the other, and the S line in the middle is half Yang and half Yin, (just like semivowel y, and the "y" in the maternal line transforms from Yin (Muyuan) into Yang (Zili)). See Figs. 13a (Taiji diagram) and 13b (illustrative view of the maternal line).

Daoism believes that the original world was Wuji (motionless) and in absolute balance before it was born, Wuji transformed into Yin and Yang, and the myriad creatures were born from the balance between Yin and Yang.

The symbol of the maternal lines of the present invention comprises Yin (which is the letter "A" black ground) on one side, Yang (the letter "Z" white background), and the dividing line in the middle is half Yang and half Yin, (a reversed "Y").

While we have shown and described various embodiments in accordance with the present invention, it is clear to those skilled in the art that further embodiments may be made without departing from the scope of the present invention.

Fig. 5 shows the maternal lines and phonetic symbols of a part of the words of the present invention;

Fig. 6 shows the maternal lines and phonetic symbols of a part of the words of the present invention;

Fig. 7 shows the maternal lines and phonetic symbols of a part of the words of the present invention;

Fig. 8 shows the maternal lines and phonetic symbols of a part of the words of the present invention;

Fig. 9 shows the example of making up and editing story and phonetic symbol comparison;

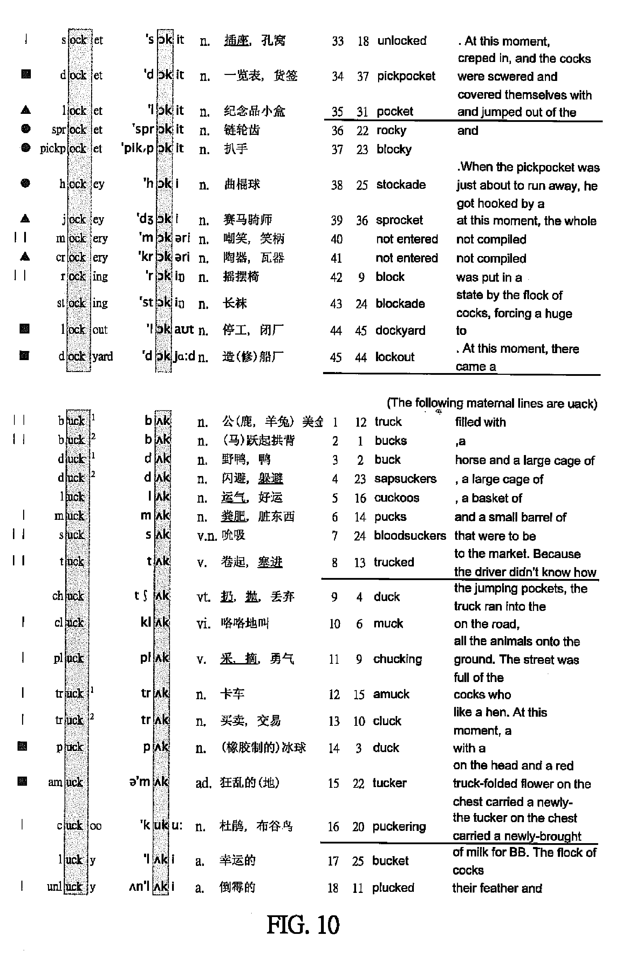

Fig. 10 shows the example of making up and editing story and phonetic symbol comparison;

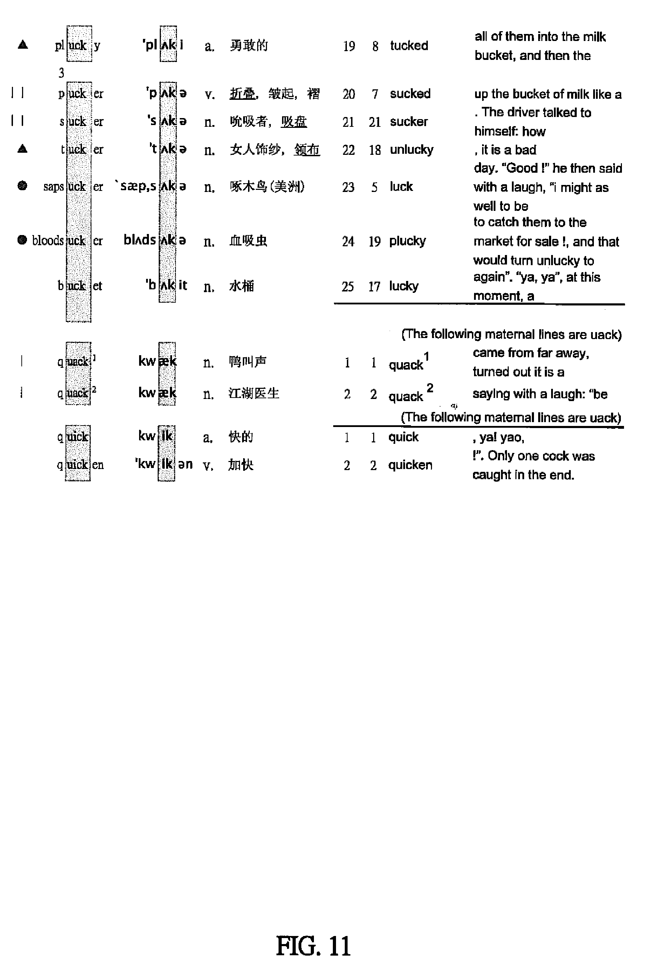

Fig. 11 shows the example of making up and editing story and phonetic symbol comparison;

Fig. 12 shows the examples of compound words.

Muyuan are vowels and called Muyuan in maternal lines, and consonant in maternal lines are called Zili.

The present invention aims at enhancing international science/technology and culture exchange, and the economic and trade development. The idea of the present invention can be traced back to before Christ era, where the Chinese ancient culture heritage-Taiji diagram was born. The maternal line is just like the Taiji diagram: Yin (Muyuan) on one side, Yang (Zili) on the other, and the S line in the middle is half Yang and half Yin, (just like semivowel y, and the "y" in the maternal line transforms from Yin (Muyuan) into Yang (Zili)).

Daoism believes that the original world was Wuji (motionless) and in absolute balance before it was born, Wuji transformed into Yin and Yang, and the myriad creatures were born from the balance between Yin and Yang.

The symbol of the maternal lines of the present invention comprises Yin (which is the letter "A" black ground) on one side, Yang (the letter "Z" white background), and the dividing line in the middle is half Yang and half Yin, (a reversed "Y").

While we have shown and described various embodiments in accordance with the present invention, it is clear to those skilled in the art that further embodiments may be made without departing from the scope of the present invention.

## Claims

1. An Guixi input method for splitting word letters comprising: forming maternal lines by splitting each word into a plurality of groups; then forming a Guixi system by sorting and classifying of the maternal lines, and each maternal line consisting of vowels and following consonants, the vowels being called Muyuan and the following consonants being called Zili.

2. The Guixi input method for splitting word letters as claimed in claim 1, wherein the splitting of each word into a plurality of groups starts from a first letter of the word, each group consists of the vowels and the following consonants.

3. The Guixi input method for splitting word letters as claimed in claim 1, wherein a first letter of the word is considered as a group if it is a consonant or connected consonant.

4. The Guixi input method for splitting word letters as claimed in claim 1, wherein if a last letter of the word left is a vowel or connected vowel, it doesn't constitute a group.

5. The Guixi input method for splitting word letters as claimed in claim 1, wherein a middle group is the maternal line when the word contains an odd number of groups, and a center right group is the maternal line when the word contains an even number of groups.

6. The Guixi input method for splitting word letters as claimed in claim 1, wherein each of the maternal lines of all vocabulary words is unique and independent since words with same maternal line are collected together, then a consonant with monophthong is sorted, and then a consonant with the diphthong before the consonant is sorted, and the maternal lines are shown in a colored column.

7. The Guixi input method for splitting word letters as claimed in claim 1, wherein a letter "Y" is a semivowel and serves as a consonant when it is the first letter of a word, when it is not the first letter of a word and the letter before "Y" is a consonant, the "Y" serves as a vowel, otherwise, it serves as a consonant,

8. The Guixi input method for splitting word letters as claimed in claim 1, wherein the Guixi system comprises display, display drive circuit, keyboard, storage device, program module, disc drive, and CPU, the words are classified and sorted according to material lines, the maternal lines are written into software and burned into optical disks which can be read by machine and displayed on the display.
